Europäisches Patentamt

European Patent Office

Office européen des brevets

(19)

(11) Veröffentlichungsnummer: **0 185 217**
**A1**

(12) # EUROPÄISCHE PATENTANMELDUNG

(21) Anmeldenummer: 85114880.9

(22) Anmeldetag: 23.11.85

(51) Int. Cl.⁴: **F 16 F 9/30**

(30) Priorität: 21.12.84 CH 6216/84

(43) Veröffentlichungstag der Anmeldung:
25.06.86 Patentblatt 86/26

(84) Benannte Vertragsstaaten:
AT BE CH DE FR GB IT LI NL SE

(71) Anmelder: Willi Studer AG, Fabrik für elektronische
Apparate
Althardstrasse 30
CH-8105 Regensdorf(CH)

(72) Erfinder: Asger, Nielsen
Rebenstrasse 484
CH-5426 Lengnau(CH)

(54) **Dämpfungselement.**

(57) Bei einem Dämpfungselement das zwei zueinander
bewegliche Teile (1, 2) aufweist und bei dem durch die
Bewegung dieser Teile zueinander ein Medium über eine
Verbindung zwischen zwei Räumen (3, 4) bewgt wird,
besteht diese Verbindung aus einem Raum (32, 33, 34, 35, 36,
37, 38) dessen Dimension durch die Bewegung der Teile
verändert wird.

Fig 1

0185217

Dämpfungselement
----------------

Die Erfindung betrifft ein Dämpfungselement zur Veränderung des zeitlichen Verlaufes der Geschwindigkeit einer begrenzten Bewegung zweier Teile zueinander, wobei durch die Bewegung ein Medium über eine Verbindung zwischen zwei Räumen bewegt wird.

Dämpfungselemente werden im Maschinenbau und im Apparatebau sehr oft verwendet, um die Bewegung zu verzögern, die zwei Teile einer Maschine oder eines Apparates zueinander um einen begrenzten Weg auszuführen haben. Eine solche Verzögerung kann am Beginn und/oder am Ende des Weges wünschbar sein, um die Wirkung der Beschleunigung oder der Verzögerung auf die betreffenden Teile zu mildern. Dies, weil das Antriebselement das diese Bewegung bewirkt meistens kein Mittel zur Dämpfung der erzeugten Antriebskraft aufweist.

Als Dämpfungselemente sind beispielsweise sogenannte Kolben-dämpfer bekannt. Diese bestehen aus einem Zylinder in welchem ein Kolben bewegbar angeordnet ist. Dabei bilden der Zylinder und der Kolben zusammen einen mehr oder weniger dicht geschlossenen Raum in welchem ein Medium z.B. Luft, Wasser oder Oel eingeschlossen ist. Eine Oeffnung oder eine Leitung verbindet diesen Raum mit einem andern Raum. Durch die Bewegung die der Kolben erfährt, wird dieses Medium aus diesem geschlossenen Raum in den anderen Raum herausgedrängt oder vom anderen Raum in den geschlossenen Raum hineingezogen. Je nach

**0185217**

dem Querschnitt der Oeffnung und je nach der Beschaffenheit des Mediums geschieht dies mehr oder weniger rasch oder mit mehr oder weniger Widerstand.

Der Nachteil solcher bisher bekannter Lösungen besteht darin, dass solche Dämpfungselemente teuer sind. Dies weil die Präzision mit der gewisse Teile herzustellen sind nicht vernachlässigt werden darf. Beispielsweise muss der Kolben im Zylinder möglichst frei bewegbar sein aber trotzdem soll das Medium nicht zwischen dem Kolben und dem Zylinder entweichen können. Dies wird bisher dadurch vermieden, dass der Kolben und der Zylinder fein bearbeitet sind. Damit diese aufwendige Bearbeitung einen Sinn hat, werden auch höhere Anforderungen an die Steifigkeit oder die Formfestigkeit der Teile gestellt. Dies wiederum beschränkt die Wahl der Materialien, die zur Herstellung solcher Teile in Betracht gezogen werden können.

Die Erfindung wie sie in den Ansprüchen gekennzeichnet ist löst die Aufgabe ein Dämpfungselement zu schaffen, das billig und einfach herzustellen ist und keine grossen Anforderungen an die Genauigkeit der Bearbeitung und an das Material stellt, aus dem es hergestellt ist.

Die durch die Erfindung erreichten Vorteile sind insbesondere darin zu sehen, dass dieses Dämpfungselement in seiner einfachsten Ausführung nur aus zwei Teilen besteht, die einander nicht berühren. Deshalb ist keine Abnützung dieser Teile möglich und deren Lebensdauer ist je nach Material unbegrenzt. Da sich die Teile nicht berühren, können sie auch keinen Abrieb erzeugen und somit auch keine Verschmutzung zwischen den Teilen verursachen. Die Toleranzen mit denen diese Teile hergestellt werden, sind in weiten Bereichen wählbar. Sehr enge Toleranzen somit nicht unbedingt erforderlich. Deshalb ist das erfindungsgemässe Dämpfungselement auch unempfindlich gegen Verschmutzung von aussen.

Im folgenden wird die Erfindung anhand von lediglich einen Ausführungsweg darstellenden Zeichnungen näher erlautert. Es zeigt

Figur 1 ein erfindungsgemässes Dämpfungselement im Schnitt,

Figur 2 ein Dämpfungselement gemäss Figur 1 in anderer Stellung,

Figur 3 ein Weg – Zeit – Diagramm für die Bewegung eines solchen Dämpfungselementes und die

Figuren 4, 5 und 6 je ein weiteres Ausführungsbeispiel eines Dämpfungselementes.

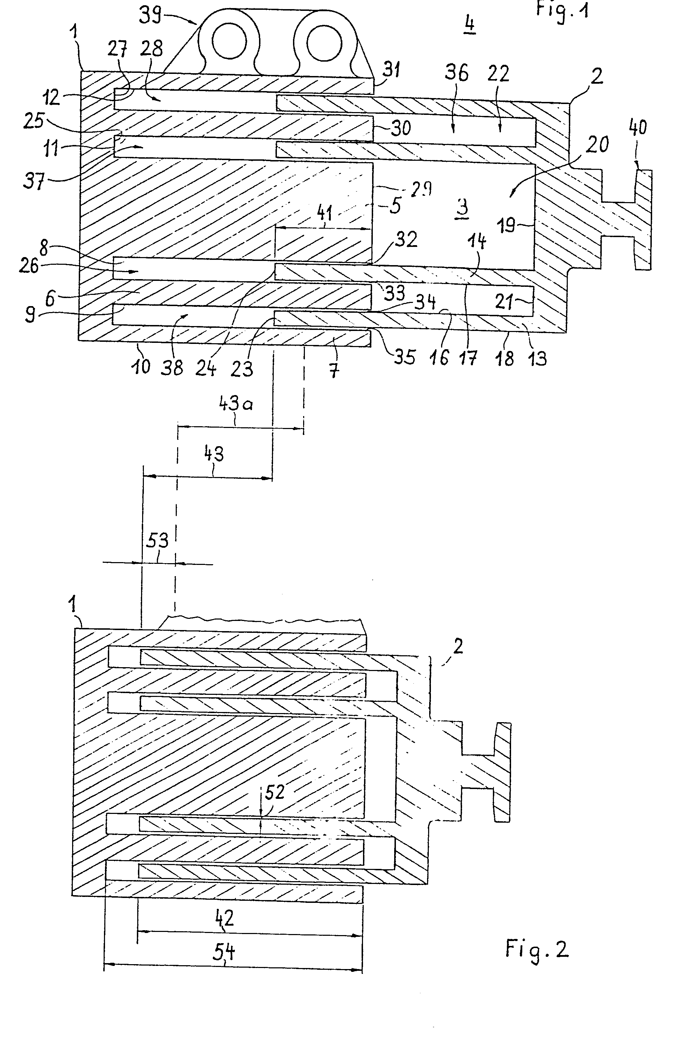

Figur 1 zeigt ein Dämpfungselement gemäss der Erfindung teilweise im Schnitt. Dabei erkennt man die beiden Teile 1 und 2 aus denen ein solches Dämpfungselement besteht. Die beiden Teile 1 und 2 sind so ausgebildet, dass sie in der Lage sind ein Medium, z.B. Luft aus einem ersten Raum 3 in einen zweiten Raum 4 z.B. die Umgebung zu bewegen.

Teil 1 besteht im wesentlichen aus einem Kolben 5 und weiteren koaxial zu diesem angeordneten Ringkolben 6 und 7. Der Kolben 5 und die Ringkolben 6 und 7 weisen zylindrische Aussenflächen 8, 9 und 10 sowie zylindrische Innenflächen 11 und 12 auf und sind durch Stirnflächen 29, 30 und 31 abgeschlossen.

Teil 2 besteht im wesentlichen aus Ringkolben 13 und 14 mit koaxialen zylindrischen Innenflächen 15 und 16 sowie zylindrischen Aussenflächen 17 und 18. Die Innenfläche 15 bildet zusammen mit einer Stirnfläche 19 einen Zylinder 20 mit Kreisquerschnitt. Die Innenfläche 16 und die Aussenfläche 17 bilden zusammen mit einer dazwischen liegenden Stirnfläche 21 einen Ringzylinder 22. Die Ringkolben 13 und 14 weisen je eine Stirnfläche 23 und 24 auf.

Ebenso bilden im Teil 1 die Aussen- und Innenflächen 8 und 11 mit einer Stirnfläche 25 einen Ringzylinder 26 und Aussen- und Innenflächen 9 und 12 zusammen mit einer Stirnfläche 27 einen Ringzylinder 28.

Diese Anordnung schafft zwischen den Räumen 3 und 4 eine Verbindung die aus weiteren Räumen besteht. Solche Räume 32, 33, 34 und 35 werden durch die Innenflächen und Aussenflächen der Kolben 5, 6 und 7 und Zylinder 20 und 22 oder der Ringkolben 13 und 14 und der Ringzylinder 26 und 28 gebildet. Ferner bilden die Ringzylinder 22, 26 und 28 zwischen den Stirnflächen 21 und 30, 24 und 25 und 23 und 27 weitere Räume 36, 37 und 38. Verfolgt man den Weg, den das Medium zwischen den Räumen 3 und 4 zurücklegen muss, also längs einer der drei Dimensionen der Räume 32, 33, 34, 35, 36, 37, 38, so stellt man fest, dass der Querschnitt der dem Medium Durchlass gewähren soll sich mehrmals verändert. Der Teil 1 weist ferner übliche und frei wählbare Befestigungsmittel 39 und der Teil 2 entsprechende Mittel 40 auf. Die Räume 32, 33, 34 und 35 haben eine Länge 41.

Figur 2 zeigt das erfindungsgemässe Dämpfungselement dessen Teile 1 und 2 in zusammengeschobener Stellung dargestellt sind. Die Räume 32, 33, 34 und 35 haben dabei eine Länge 42. Die Differenz zwischen der Länge 41 und der Länge 42 sei als Weg 43 der Bewegung bezeichnet. Die Kolben und Ringkolben der beiden Teile 1 und 2 bilden vorzugsweise prismatische Körper und weisen eine Länge 54 auf, die grösser ist als der Weg 43 der Bewegung.

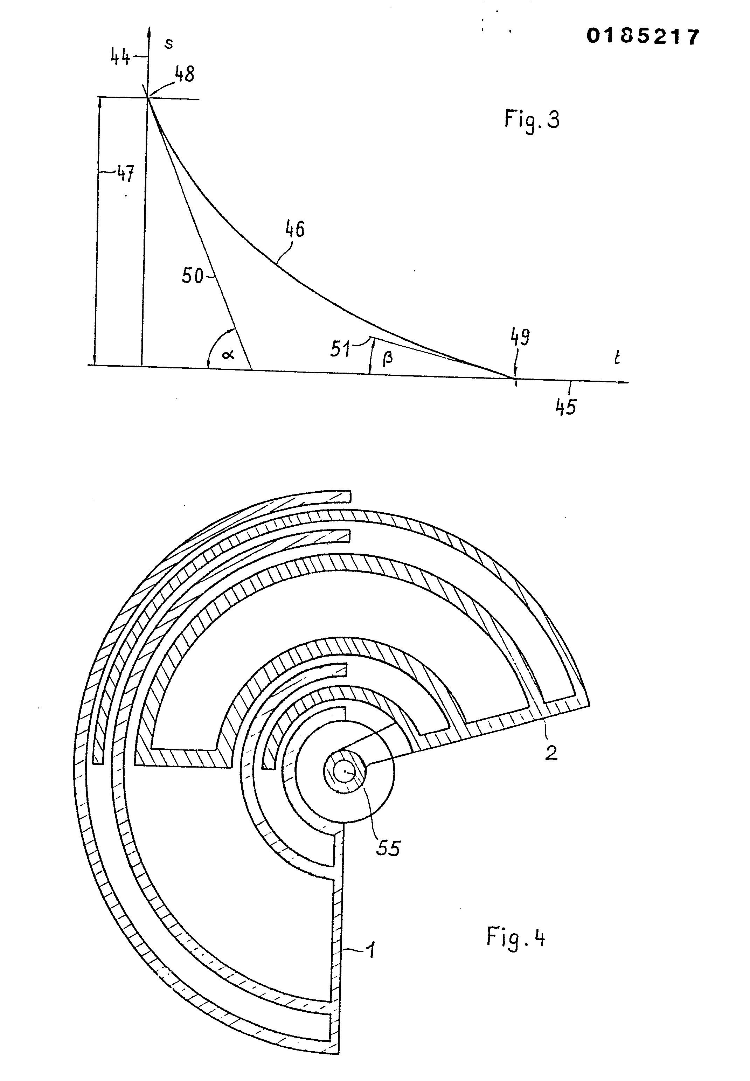

Figur 3 zeigt eine Darstellung eines Bewegungsablaufes zweier Teile 1 und 2 eines Dämpfungselementes zueinander. Auf einer vertikalen Achse 44 sei der Weg s der Bewegung und auf einer horizontalen Achse 45 die Zeit t für die Bewegung aufgetragen. Eine Kurve 46 gibt an in welcher Zeit welcher Teil des Weges zurückgelegt wird. Der gesamte Weg 47 entspreche beispielsweise dem Weg 43 gemäss Figur 1 und 2. An Endpunkten 48 und 49 der Bewegung sind Tangenten 50 und 51 eingezeichnet, die die momentane Geschwindigkeit der Bewegung im Bereiche dieser Endpunkte 48 und 49 darstellen soll. Der Tangens des Winkels ALFA bzw BETA die diese Tangenten 50 und 51 mit der Achse 45 bilden, sind proportional zu diesen Geschwindigkeiten.

Figur 4 zeigt ein Dämpfungselement zur Dämpfung einer Drehbewegung. Dabei sind die Teile 1 und 2 um eine Achse 55 drehbar angeordnet. Der Aufbau der Teile 1 und 2 ist aber derselbe wie bei der Ausführung gemäss Figur 1. Der Querschnitt der Teile 1 und 2 kann in beiden Fällen beliebige Formen annehmen.

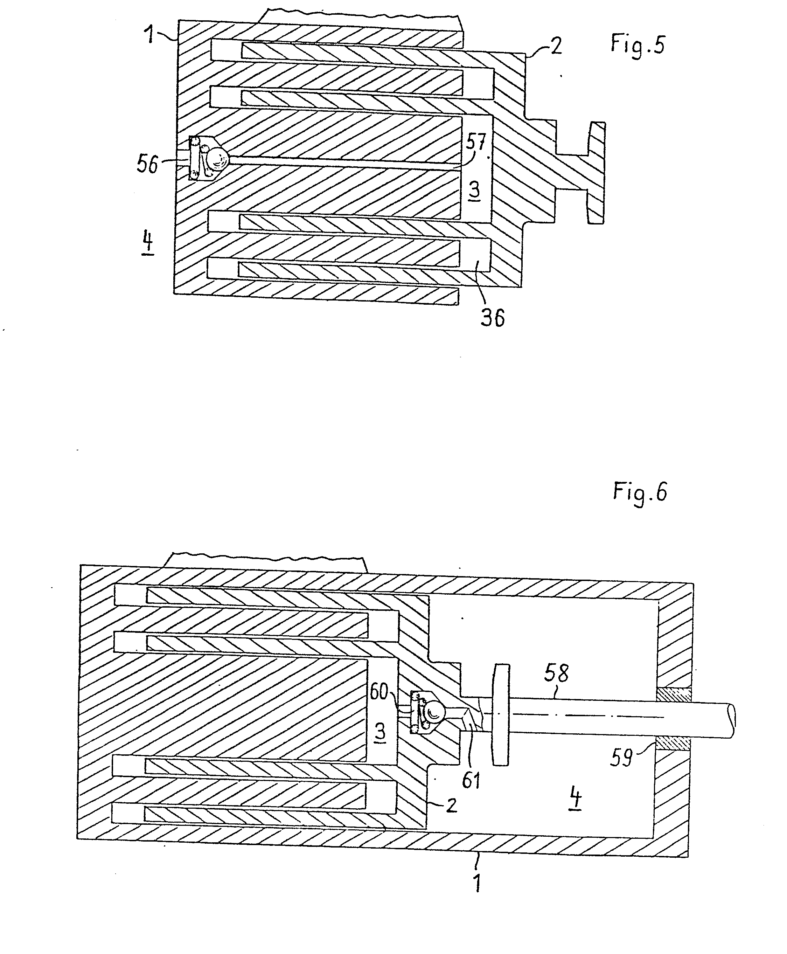

Figur 5 zeigt ein weiteres Ausführungsbeispiel des Dämpfungselementes bei dem die Räume 3 und 4 zusätzlich über eine Leitung 57 und ein Ventil 56 verbunden sind. Das an sich bekannte und deshalb hier nur schematisch dargestellte Ventil 56 ist so ausgebildet, dass es nur in einer der beiden Bewegungsrichtungen der Teile 1 und 2 zueinander öffnet. Ebenso könnte ein weiteres Ventil die Räume 4 und 36 auf dieselbe Art miteinander verbinden.

Figur 6 zeigt ein weiteres Ausführungsbeispiel des Dämpfungselementes bei dem die Räume 3 und 4 beide abgeschlossen sind. Zwischen den Räumen 3 und 4 besteht die erfindungsgemässe Verbindung wie sie aus den Figuren 1 und 2 bekannt ist. Der Teil 2 umschliesst den Teil 1 sowie den Raum 4. Der Teil 1 ist mit einer Kolbenstange 58 versehen, und somit von aussen bewegbar. Ein an sich bekanntes Dichtungselement 59 dichtet den Raum 4 gegen aussen oder die Kolbenstange 58 gegen den Teil 1 ab. Durch den Einbau eines Ventiles 60 mit einer Leitung 61 zwischen den Räumen 3 und 4 im Teil 2 kann die Bewegungscharakteristik fuer die eine Bewegungsrichtung verändert werden.

0185217

Die Wirkungsweise des erfindungsgemässen Dämpfungselementes besteht im wesentlichen darin, dass das Medium durch die Bewegung der Teile 1 und 2 gegeneinander oder voneinander aus dem Raum 3 in den Raum 4 oder umgekehrt fliessen muss, wobei das Medium infolge der mehr oder weniger engen Querschnitte in den weiteren Räumen 32, 33, 34 und 35 mehr oder weniger grossen Widerstand zu überwinden hat. Dabei steigt dieser Widerstand an wenn die Länge 41 der Räume 32, 33, 34 und 35 vergrössert wird. Das bedeutet einerseits, dass die Geschwindigkeit der Bewegung sich bei fortschreitender Bewegung laufend verändert und andererseits, dass der Widerstand in den Endbereichen der Bewegung unterschiedlich ist. Wird eine Bewegung ausgehend von der Stellung der Teile 1 und 2 wie in Figur 1 gezeigt eingeleitet, so ist der Widerstand geringer und somit die Bewegung schneller als wenn eine Bewegung aus der Stellung der Teile 1 und 2 gemäss Figur 2 eingeleitet wird. Diese Verhältnisse sind in Figur 3 grafisch veranschaulicht. Der Verlauf der Kurve 46 hängt auch davon ab, ob das Medium kompressibel ist oder nicht. Bei kompressiblen Medien kann die Geschwindigkeit der Bewegung im Bereiche des Endpunktes 48 im Gegensatz zur Geschwindigkeit im Bereiche des Endpunktes 49 höhere Werte erreichen. Dies weil bei der Stellung der Teile 1 und 2 welche dem Endpunkt 48 entspricht, in den Räumen 20, 36, 37 und 38 grössere Volumen vorhanden sind, die komprimiert oder expandiert werden können.

Die Geschwindigkeit der Bewegung der Teile 1 und 2 zueinander hängt somit ab von der Länge 41, 42 und der Breite 52 der Räume 32, 33, 34 und 35, von der Viskosität des verwendeten Mediums, von der Beschaffenheit der Innenflächen 12, 16, 11, 15 und Aussenflächen 18, 9, 17, 8, von der auf die Teile 1 und 2 ausgeübten Kraft und von der Grösse der Räume 20, 36, 37 und 38 ab. Durch geeignete Abstimmung dieser Einflussgrössen kann die gewünschte Dämpfung eingestellt werden. Beispielsweise kann eine relativ hohe Rauhigkeit der Innen- und Aussenflächen ausgeglichen werden, indem man auch die Breite 52 der Räume 32, 33, 34 und 35 grösser wählt. Beides trägt wesentlich dazu bei die Herstellungskosten dieser Teile herabzusetzen. Oder die Einstellung einer gewünschten Dämpfung durch bereits vorliegende Teile 1 und 2 kann erreicht werden, indem man das Dämpfungselement so einbaut, dass bei gleichem Weg 43a die Ausgangsposition der Teile 1 und 2 gegeneinander um einen Weg 53 verschoben ist. Das erfindungsgemässe Dämpfungselement kann als auf dem Prinzip einer Labyrinthdichtung aufgebaut betrachtet werden.

Durch die Bewegung der Teile 1 und 2 zueinander um einen Weg 43 erhöht sich die veränderbare Dimension des Raumes 32, 33, 34, 35, 36, 37 und 38 um einen Betrag, der grösser ist als der Weg 43. In diesem Falle beträgt dieser Betrag ein Vielfaches des Weges 43.

Bei der Ausführung des Dämpfungselementes gemäss Figur 5 kann der Bewegungsablauf der beiden Teile 1 und 2 zueinander weiter verändert werden. Für diejenige Bewegungsrichtung in der das Ventil 56 öffnet, kann die Dämpfung der Bewegung aufgehoben oder beliebig verringert werden, indem man die Bedingung für die Oeffnung des Ventiles 56 verändert. Dies geschieht beispielsweise durch eine veränderte Charakteristik der Feder des Ventils.

Bei der Ausführung des Dämpfungselementes gemäss Figur 6 wird das Medium über die Verbindung (32, 26, 33, 34, 38, 35, siehe Fig. 1) zwischen dem Raum 3 und dem Raum 4 bewegt. Wird der Teil 2 nach rechts verschoben, so fliesst das Medium aus dem Raum 4 in den Raum 3. Die Dampfung kann verringert werden, wenn das Ventil 60 vorgesehen ist. Es ermöglicht dem Medium leichter vom Raum 3 in den Raum 4 zu gelagen, vorausgesetzt, dass das Ventil 60 entsprechend eingestellt ist. Der Widerstand des Mediums beim Weg ueber das Ventil 60 muss dann kleiner sein als der Widerstand den das Medium erfährt, wenn es über die Verbindung (32, 26, 33, 34, 38, 35) fliesst.

**0185217**

Patentansprüche:

1. Dämpfungselement zur Veränderung des zeitlichen Verlaufes der Geschwindigkeit einer begrenzten Bewegung zweier Teile (1, 2) zueinander, wobei durch die Bewegung ein Medium über eine Verbindung zwischen zwei Räumen (3, 4) bewegt wird, dadurch gekennzeichnet, dass die Verbindung aus einem weiteren Raum (32, 33, 34, 35, 36, 37, 38) besteht, dessen Dimension (41, 42) mit der Bewegung der Teile (1, 2) verändert wird.

2. Dämpfungselement gemäss Anspruch 1, wobei der weitere Raum (32, 33, 34, 35, 36, 37, 38) drei Dimensionen aufweist, dadurch gekennzeichnet, dass die Masse in zwei Dimensionen die Masse in der dritten Dimension (52) wesentlich übersteigen.

3. Dämpfungselement gemäss Anspruch 2, dadurch gekennzeichnet, dass der Raum längs einer seiner Dimensionen (41, 42) gesehen, unterschiedliche Querschnitte aufweist.

4. Dämpfungselement gemäss Anspruch 1, dadurch gekennzeichnet, dass der Raum (32, 33, 34, 35, 36, 37, 38) durch Flächen (8, 9, 11, 12, 15, 16, 17, 18) begrenzt wird, die Oberflächen von prismatischen Körpern (5, 6, 7, 13, 14) bilden.

5. Dämpfungselement gemäss Anspruch 1, dadurch gekennzeichnet, dass der Raum (32) durch Zylinderflächen (8, 15) eines Kolbens (5) und eines Zylinders (20) gebildet wird und dass die Länge (54) dieses Kolbens und dieses Zylinders den Weg (43) der Bewegung übersteigt.

0185217

6. Dämpfungselement gemäss Anspruch 1, dadurch gekennzeichnet, dass der Raum durch eine Kombination von Kolben (5) und koaxial dazu angeordneten Ringkolben (6, 7, 13, 14) gebildet ist.

7. Dämpfungselement gemäss Anspruch 1, dadurch gekennzeichnet, dass die Verbindung zusätzlich ein Ventil (56) aufweist.

8. Dämpfungselement gemäss Anspruch 7, dadurch gekennzeichnet, dass das Ventil (56) nur zur Oeffnung in der einen von beiden Bewegungsrichtungen ausgebildet ist.

9. Dämpfungselement gemäss Anspruch 1, dadurch gekennzeichnet, dass die Räume (3 und 4) parallel zur Verbindung (32, 33, 34, 35, 36, 37, 38) durch ein Ventil (60) verbunden sind.

10. Dämpfungselement gemäss Anspruch 1, dadurch gekennzeichnet, dass die Dimension (41, 42) um einen Betrag verändert wird, der den Weg (43) der Bewegung uebersteigt.

11. Dämpfungselement mit zueinander bewegbaren Teilen, mit einem Raum durch den das Medium durch die Bewegung der Teile zueinander bewegt wird, wobei in diesem Raum fuer das Medium ein Widerstand erzeugt wird, dadurch gekennzeichnet, dass der Raum eine veränderliche Dimension aufweist, die durch die Bewegung der Teile verändert wird.

Fig. 1

Fig. 2

0185217

0185217

Fig. 3

Fig. 4

Fig.5

Fig.6

Europäisches
Patentamt

**EUROPÄISCHER RECHERCHENBERICHT**

**0185217**

Nummer der Anmeldung

EP 85 11 4880

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl 4) |
|---|---|---|---|
| A | FR-A-1 092 543 (BESAUCELE) <br> * Seite 1, linke Spalte, Zeilen 21-39; Seite 2, linke Spalte, Zeilen 12-14; Figur 8 * | 1,11 | F 16 F 9/30 |
| A | FR-A-2 433 134 (HONDA) <br> * Seite 6, Zeilen 25-31; Figuren 1-3 * | 7,8 | |
| | | | **RECHERCHIERTE SACHGEBIETE (Int. Cl 4)** |
| | | | F 16 F |

Der vorliegende Recherchenbericht wurde für alle Patentansprüche erstellt

| Recherchenort | Abschlußdatum der Recherche | Prüfer |
|---|---|---|
| DEN HAAG | 17-03-1986 | ZERI A. |